# EUROPÄISCHE PATENTSCHRIFT

(11) **EP 1 309 245 B1**
(45) Veröffentlichungstag und Bekanntmachung des Hinweises auf die Patenterteilung: **01.03.2006**
(21) Anmeldenummer: 01980216.4
(22) Anmeldetag: 24.07.2001
(51) Int. Cl.: A23G 9/10, A23G 9/12, A47J 43/06, A47J 43/07, A47J 43/046

(54) **KÜCHENMASCHINE MIT EINEM RÜHRGEFÄSS SOWIE VERFAHREN ZUR HERSTELLUNG VON SPEISEEIS**
KITCHEN MACHINE WITH A STIRRER VESSEL AND METHOD FOR THE PRODUCTION OF ICE CREAM
APPAREIL MENAGER A RECIPIENT D'AGITATION, ET PROCEDE DE PRODUCTION DE GLACES

(30) Priorität: 16.08.2000 DE 10039944; 30.09.2000 DE 10048535
(43) Veröffentlichungstag der Anmeldung: 14.05.2003
(73) Patentinhaber: Vorwerk & Co. Interholding GmbH, 42275 Wuppertal (DE)
(72) Erfinder: SAUER, Ralf, D-52072 Aachen (DE); BIELZER, Raffael, 51399 Burscheid (DE)
(74) Vertreter: Müller, Enno
(86) Internationale Anmeldenummer: PCT/EP2001/008503
(87) Internationale Veröffentlichungsnummer: WO 2002/013622

(56) Entgegenhaltungen:
- DE-A- 3 921 115
- DE-A- 4 239 252
- FR-A- 2 705 585
- US-A- 3 952 538
- US-A- 4 551 026
- PATENT ABSTRACTS OF JAPAN vol. 016, no. 552 (C-1006), 20. November 1992 (1992-11-20) & JP 04 210558 A (MATSUSHITA ELECTRIC IND CO LTD), 31. Juli 1992 (1992-07-31)

## Beschreibung

Die Erfindung betrifft zunächst eine Küchenmaschine mit einem Rührgefäß, einem, durch einen elektromotorischen Antrieb betätigbaren Zerkleinerungswerk in dem Rührgefäß und/ ggf. einer, zwischen gemäßigter Temperierung und Kochen regelbaren Heizung im unteren Bereich des Rührgefäßes.

Küchenmaschinen der in Rede stehenden Art sind bekannt und dienen beispielsweise zur Herstellung von Teigen oder ähnlichem, wobei die in das Rührgefäß eingebrachten Zutaten mittels eines angetriebenen Zerkleinerungs-/Rührwerkes verrührt werden. Darüber hinaus sind Küchenmaschinen bekannt, bei welchen neben den Funktionen Rühren und Aufheizen noch die Möglichkeit eines Garens von Lebensmitteln gegeben ist. Hier wird beispielsweise auf die DE-A14414 823 verwiesen.

Aus der DE 39 21115 A1 ist eine Küchenmaschine bekannt, bei welcher das Eisbereitungsgefäß doppelwandig mit einem darin hermetisch eingeschlossenen Vereisungsmedium ausgebildet ist. Ein Rührgefäß mit einem im Bodenbereich angeordneten Rührwerk und einem Zwischenraum zwischen Rührgefäß und Eisbereitungsgefäß zur Aufnahme eines Vereisungsmediums ist hieraus nicht bekannt.

Im Hinblick auf den zuvor beschriebenen Stand der Technik wird eine technische Problematik der Erfindung darin gesehen, eine Küchenmaschine der in Rede stehenden Art in vorteilhafter Weise weiterzubilden.

Diese Problematik wird gemäß Anspruch 1 durch ein in das Rührgefäß einsetzbares, geschlossenwandiges Eisbereitungsgefäß gelöst, wobei sich zwischen dem Rührgefäß und dem Eisbereitungsgefäß ein Zwischenraum ergibt, zur Aufnahme eines Vereisungsmediums, wobei weiter in das Eisbereitungsgefäß ein Schaber hineinragt und der Schaber und/oder das Eisbereitungsgefäß drehend antreibbar ist. In einer vorteilhaften Ausgestaltung ist der Zwischenraum topfartig ausgebildet. Zufolge dieser Ausgestaltung ist eine Küchenmaschine der in Rede stehenden Art angegeben, welche neben den bekannten Funktionen wie Zerkleinern, Rühren, Kneten, Kochen oder Garen zusätzlich zur Bereitung von Speiseeis geeignet ist. Die erfindungsgemäße Vorrichtung stellt eine vielseitig einsetzbare Küchenmaschine zur Verarbeitung flüssiger bzw. rührfähiger Speisen dar, die entweder ausschließlich zum Kochen oder Gefrieren oder zum kombinierten, sequentiellen Kochen bzw. Erwärmen mit anschließendem Kühlen wahlweise Gefrieren genutzt werden kann. Im Stand der Technik sind Speiseeisbereiter bekannt, welche entweder mit einem Kälteakku, der zuvor im Gefrierschrank aufgeladen wurde, oder mit einem in dem Gerät integrierten Kühlaggregat arbeiten. Dagegen sind Kombigeräte, welche die Verarbeitung, insbesondere thermische Behandlung flüssiger bzw. rührfähiger Speisen erlaubt und den Temperaturbereich gefroren bis gekocht abdeckt nicht bekannt. Zudem erlauben die bekannten Lösungen kein sequentielles Heizen und Kühlen bzw. Kühlen und Heizen der Speisen. Zur Speiseeisbereitung wird erfindungsgemäß das auch zum Garen und Kochen bzw. Rühren geeignete Rührgefäß zur Aufnahme des Vereisungsmediums genutzt. Hierzu werden nach vorgeschriebenen Rezepturen in das Rührgefäß beispielsweise Eiswürfel und Salz oder auch Eiswürfel aus einer gefrorenen Salzlösung dosiert. Das der Speiseeisbereitung dienende Eisbereitungsgefäß wird derart in das Rührgefäß eingesetzt, dass sich zwischen Letzterem und dem Rührgefäß ein, bevorzugt topfartiger Zwischenraum ergibt, zur Kältebeaufschlagung des Eisbereitungsgefäßes durch das Vereisungsmedium. Bevorzugt wird das eingebrachte Vereisungsmedium durch das Zerkleinerungswerk in dem Rührgefäß aufbereitet, so dass eine homogene Durchmischung gesichert ist. Hieraus ergibt sich ein optimales Kühlergebnis. Von Hand erstellte Mischungen sind hingegen zumeist inhomogen und daher weniger effizient. Zudem gewährleistet das feingemahlene Eis des Vereisungsmediums einen optimalen Übergang zum Eisbereitungsgefäß. Um der Bildung einer isolierenden Eisschicht auf dem Eisbereitungsgefäß-Boden oder auch an dessen Innenwandung zu verhindern, ragt ein Schaber in das Eisbereitungsgefäß ein, wobei der Schaber und das Eisbereitungsgefäß relativ zueinander drehbar sind. So kann beispielsweise das Eisbereitungsgefäß feststehend und der Schaber drehend antreibbar ausgebildet sein. Alternativ kann auch der Schaber feststehend gebildet sein, bei drehbar antreibbarem Eisbereitungsgefäß. Weiter alternativ ist auch denkbar, dass Schaber und Eisbereitungsgefäß gegensinnig drehend angetrieben sind. Letzteres wird zur Speiseeisbereitung auf das, bevorzugt homogenisierte Vereisungsmedium gesetzt, wobei der Boden des Eisbereitungsgefäßes in vorteilhafter Weise derart geformt ist, dass dieser der Oberflächenkontur des Vereisungsmedium-Bettes angepasst ist. Das Eisbereitungsgefäß kann hierbei beispielsweise über geeignete Kupplungselemente in Form von Rippen oder Stiften mit dem Zerkleinerungswerk des Rührgefäßes verbunden sein, wodurch das Eisbereitungsgefäß relativ zu dem, beispielsweise an dem Rührgefäßdeckel befestigten oder an diesem angeformten Schaber gedreht werden kann. Die rippenartigen Kupplungselemente des Eisbereitungsgefäßes können weiter so ausgeformt sein, dass sie zugleich als Abstellfüße des Eisbereitungsgefäßes dienen. Konzentrisch geformte Rippensegmente erlauben ein Drehen des Eisbereitungsgefäßes bei gleichzeitiger Durchmischung des Vereisungsmedium-Bettes. Durch die erfindungsgemäße Lösung kann die Kühlleistung und die Kühltemperatur durch Mengen- bzw. Rezepturvariationen des Vereisungsmediums eingestellt werden. Darüber hinaus ist das Vereisungsmedium bei Anordnung einer im unteren Bereich des Rührgefäßes positionierten, zwischen gemäßigter Temperierung und Kochen regelbaren Heizung das Vereisungsmedium auf eine gewünschte Vereisungstemperatur einstellbar. Wie erwähnt, ist die erreichbare Kühltemperatur und -leistung zumindest zunächst über die Rezeptur und Menge festlegbar. So werden beispielsweise bei einer Mischung von Eis und NaCl -21°C und bei einer Mischung von Eis und CaCl2 eine Temperatur von -50°C erreicht. Bei einer Anordnung einer Waageneinrichtung in der Küchenmaschine ist mittels dieser die Dosierung eines optimalen Mischungsverhältnisses garantiert. Darüber hinaus dient diese integrierte Waage auch nach einem Einsetzen des Eisbereitungsgefäßes der rezeptgemäßen Mischung der Speiseeiszutaten. In einer Weiterbildung des Erfindungsgegenstandes kann vorgesehen sein, dass der Schaber feststehend an der Küchenmaschine angeordnet ist und dass das Eisbereitungsgefäß durch den Zerkleinerungsantrieb drehend antreibbar ist. Der Schaber kann hierbei beispielsweise im Bereich eines Rührgefäßdeckels klemmgehaltert oder an diesem angeformt sein. Weiter kann vorgesehen sein, dass das Eisbereitungsgefäß bodenunterseitig eine Formschluss-Kupplungsausnehmung aufweist, zur Ankupplung an einem, frei in das Rührgefäß hineinragenden, bevorzugt zentralen Kupplungsvorsprung des Zerkleinerungswerkes. Zufolge dieser Ausgestaltung dreht sich das Eisbereitungsgefäß zusammen mit dem Zerkleinerungswerk, was durch die ständige gleichzeitige Bewegung des Vereisungsmediums mittels des dieses verrührenden Zerkleinerungswerkes und der damit einhergehenden Drehung des Eisbereitungsgefäßes einen optimalen Wärmeübergang bietet. Alternativ kann vorgesehen sein, dass das Eisbereitungsgefäß an einem Deckel des Rührgefäßes aufgehängt in das Rührgefäß hineinragt und das der Schaber durch einen gesonderten Motor angetrieben von oben in das Eisbereitungsgefäß hineinragend mit dem feststehenden Eisbereitungsgefäß zusammenwirkt. Das Eisbereitungsgefäß ist hierbei undrehbar, jedoch bevorzugt lösbar an dem Rührgefäßdeckel gehaltert. Der Schaber und der diesen antreibende Motor können wahlweise in dem Deckel integriert sein oder auch durch eine Befüllöffnung des Deckels eingesteckt sein. Weiter alternativ kann vorgesehen sein, dass das Eisbereitungsgefäß an einem Deckel des Rührgefäßes um eine Vertikalachse drehbar aufgehängt in das Rührgefäß hineinragt und ein gesonderter Motor das Eisbereitungsgefäß relativ zu dem feststehenden Schaber antreibt. Das Eisbereitungsgefäß wird hierbei beispielsweise über einen am Umfang angebrachten Form-/Zahnkranz oder mittels Kraftschluss (beispielsweise Reibbelag) von einem Motor, welcher beispielsweise in dem Deckel integriert ist, gedreht. Der Schaber kann hierbei wahlweise in dem Deckel integriert sein oder durch die Befüllöffnung im Deckel eingesteckt sein. In weiterer Ausgestaltung des Erfindungsgegenstandes ist vorgesehen, dass zur Vermeidung von Wärmeverlusten das Rührgefäß außenwandig mit einer Wärme-Isolierschicht versehen ist. Alternativ kann auch eine innenwandige Auskleidung des Rührgefäßes mit einer Wärme-Isolationsschicht vorgesehen sein. Mittels der erfindungsgemäßen Küchenmaschine sind in Abhängigkeit von der Eis/Salzmischung Temperaturen bis zu -55°C (bei Mischungen mit CO2 und Ether sogar bis -100°C) einstellbar. Hierdurch werden Rezepte möglich, welche mit bekannten Eismaschinen nicht realisierbar sind, so beispielsweise Sorbets mit Alkoholanteil. Die Kälteerzeugung ist auch durch Mischen von Wasser und Salz möglich. Darüber hinaus ist eine tiefkühlschrankunabhängige Eisbereitung/Kühlung möglich, so beispielsweise zur Herstellung von Hüttenkäse.

Die Erfindung betrifft des Weiteren ein Verfahren zur Herstellung von Speiseeis in einer Küchenmaschine, wobei die Küchenmaschine ein Rührgefäß und ein in dem Rührgefäß wirkendes Zerkleinerungswerk aufweist, wobei weiter mittels des Zerkleinerungswerks ein Vereisungsmedium fein zerkleinert wird und bei Verbleib in dem Rührgefäß zur Anlage an einen, in das Rührgefäß eingesetzten Eisbereitungsgefäß gebracht wird, in welch letzterem ein Schaber wirkt zur Abschabung der Speiseeismasse von der Innenwandung des Eisbereitungsgefäßes. Zufolge dieses erfindungsgemäßen Verfahrens ist die Herstellung von Speiseeis in Küchemaschinen, welche auch beispielsweise der Herstellung von Teigen oder ähnlichem dienen, ermöglicht, wobei das Vereisungsmedium in demselben Rührgefäß angeordnet ist, in welchem auch die beispielhafte Teigbearbeitung erfolgen kann. Die Zutaten zur Speiseeisherstellung werden in ein weiteres Gefäß, dem Eisbereitungsgefäß eingebracht, wonach dieses in das, das Vereisungsmedium aufweisende Rührgefäß eingesetzt wird. Ein optimales Kühlergebnis ist dadurch gewährleistet, dass das Vereisungsmedium fein zerkleinert und somit homogenisiert ist. Zur Vermeidung der Bildung einer isolierenden Eisschicht dreht sich der Schaber oder das Eisbereitungsgefäß oder auch darüber hinaus beide bei gegenläufiger Drehung. Das Vereisungsmedium kann darüber hinaus auch bei Küchenmaschinen ohne Zerkleinerungswerk homogenisiert, d. h. fein zerkleinert zugeführt sein. In einer Weiterbildung des erfindungsgemäßen Verfahrens kann vorgesehen sein, dass eine Aufheizung des Rührgefäßes vorgenommen wird, um das Vereisungsmedium auf eine gewünschte Vereisungstemperatur einzustellen. Das Vereisungsmedium ist bevorzugt gebildet durch eine Mischung aus beispielsweise Eis und NaCl oder auch Eis und CaCl, womit Temperaturen von -21°C bzw. -50°C erreicht werden. Durch gezielte Wärmebeaufschlagung mittels einer in der Küchenmaschine integrierten und auf das Rührgefäß einwirkenden Heizung kann eine gewünschte Kühltemperatur oberhalb der Mischungstemperatur eingestellt werden.

Die Erfindung ist nachstehend anhand der beigefügten Zeichnungen, welche lediglich Ausführungsbeispiele darstellen, näher erläutert. Es zeigt:
- Fig. 1: eine erfindungsgemäße Küchenmaschine mit einem Rührgefäß und einem darin eingesetzten Eisbereitungsgefäß in Seitenansicht;
- Fig. 2: die Draufsicht zu Fig. 1;
- Fig. 3: den Bereich der Rührtopfaufnahme der Küchenmaschine mit eingesetztem Rührtopf, in einer partiell geschnittenen, schematischen Darstellung;
- Fig. 4: eine der Fig. 3 entsprechende Darstellung, jedoch nach Einsetzen des Eisbereitungsgefäßes und Verschließen des Rührgefäßes mittels eines Deckels;
- Fig. 5: eine der Fig. 4 entsprechende Darstellung, jedoch einen alternative Ausführungsform betreffend;
- Fig. 6: eine weitere alternative Ausführungsform gemäß der Darstellung in Fig. 4;
- Fig. 7: eine der Fig. 4 entsprechende Darstellung, eine weitere Ausführungsform betreffend;
- Fig. 8: eine Ausschnitt-Darstellung des Bereiches VIII-VIII in Fig. 7, mit einer außenseitig des Rührgefäßes angeordneten Wärme-Isolationsschicht;
- Fig. 9: eine der Fig. 8 entsprechende Ausschnitt-Darstellung, jedoch eine weitere Ausführungsform mit innenwandiger Wärme-Isolationsschicht betreffend.

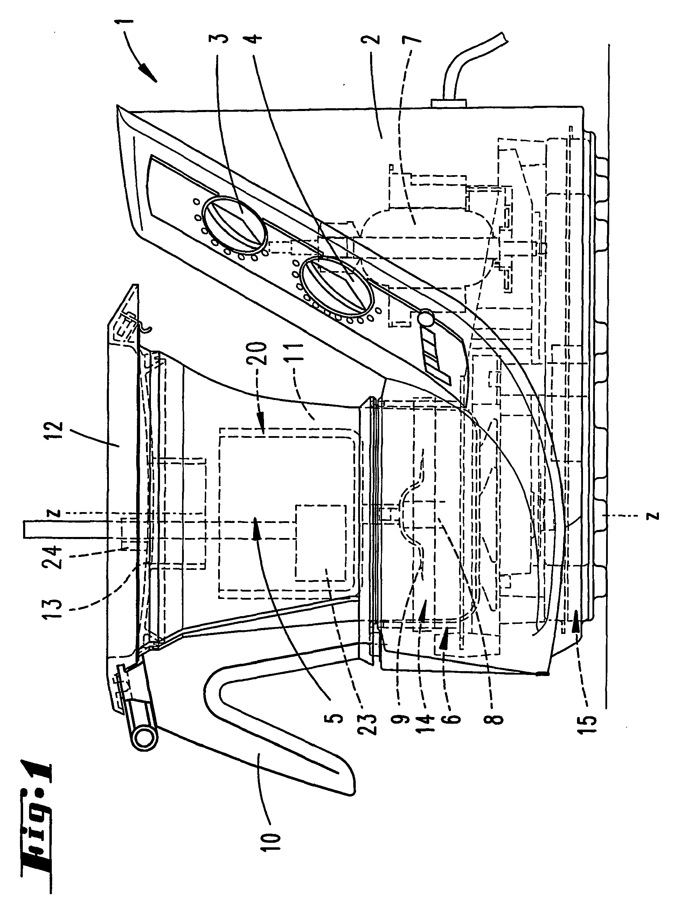

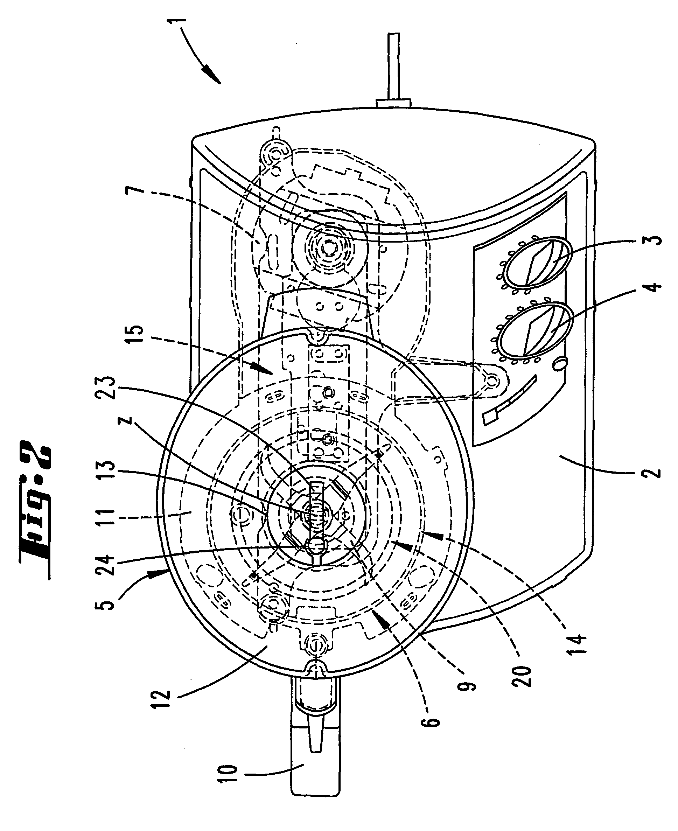

Dargestellt und beschrieben ist zunächst mit Bezug zu den Fig. 1 und 2 eine Küchenmaschine 1 mit einem Gehäuse 2, in welchem zwei Drehschalter 3, 4 angeordnet sind.

Zur Halterung eines Rührgefäßes 5 in der Küchenmaschine 1 ist diese mit einer Rührgefäßaufnahme 6 versehen. Ein in dem Gehäuse 2 angeordneter Antrieb 7, beispielsweise in Form eines Elektromotors, treibt über eine vertikal, koaxial zu einer Vertikalachse z der Küchenmaschine 1 ausgerichtete Antriebswelle 8 ein innerhalb des Rührgefäßes 5 im Bodenbereich angeordnetes Zerkleinerungswerk 9 an, welches über eine Kupplungsanordnung mit der Antriebswelle 8 in kraftschlüssiger Verbindung steht. Das Zerkleinerungswerk 9 ist in dem dargestellten Ausführungsbeispiel in bekannter Weise ausgebildet, in dem um 90° versetzt angeordnete, abgekröpfte Messer über eine Schraubverbindung an der rührtopfseitigen Welle drehfest gelagert sind. Die Drehzahl des Zerkleinerungswerkes 9 wird über den Drehschalter 4 eingestellt.

Das Rührgefäß 5 ist mit einem Kannengriff 10 versehen.

Der in dem Rührgefäß 5 gebildete Gefäßraum 11 ist von einem Deckel 12 überdeckt. Letzterer sitzt weitestgehend formschlüssig und dichtend auf dem oberen Rand des Rührgefäßes 5 auf. Der Deckel 12 ist trichterförmig ausgebildet, wobei eine im Wesentlichen zentral angeordnete Füllöffnung 13 vorgesehen ist.

Des Weiteren ist im Bereich der Rührgefäßaufnahme 6 eine Heizung 14, insbesondere eine Widerstandsheizung vorgesehen, welche über den Drehschalter 3 nach einem Einschalten derselben zwischen gemäßigter Temperierung und Kochen regelbar ist.

Die Heizung 14, die Rührgefäßaufnahme 6 und das Rührgefäß 5 wirken auf eine, in der Küchenmaschine 1 integrierte Waageneinrichtung 15 ein.

In dem Rührgefäß 5 können, wie in der eingangs erwähnten DE-A1 44 14 823 ausführlich beschrieben, Lebensmittel kalt oder auch temperaturbeaufschlagt behandelt, beispielsweise gerührt, zerkleinert oder gegart werden. Erfindungsgemäß ist die Küchenmaschine 1 jedoch auch zur Speiseeisbereitung geeignet.

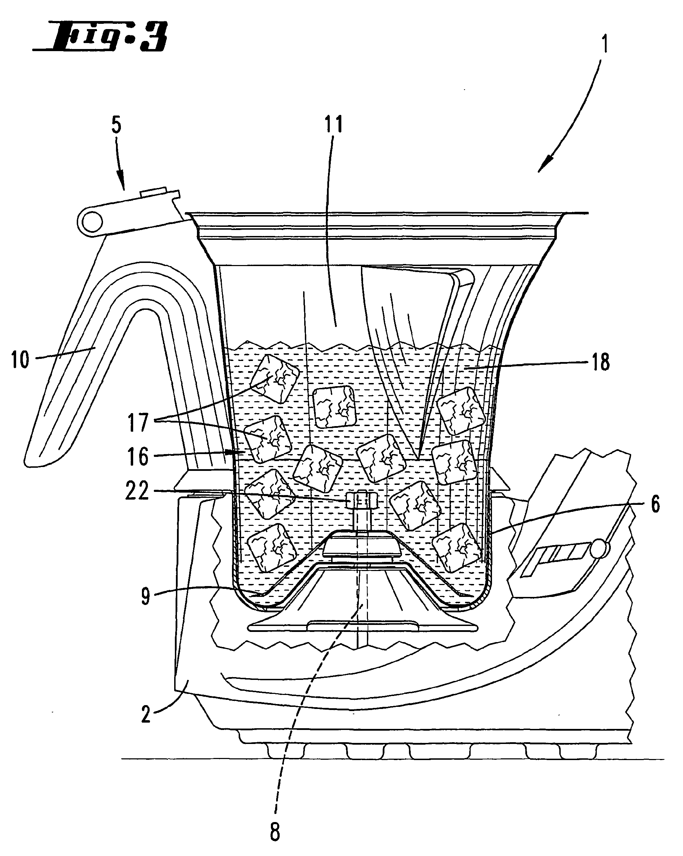

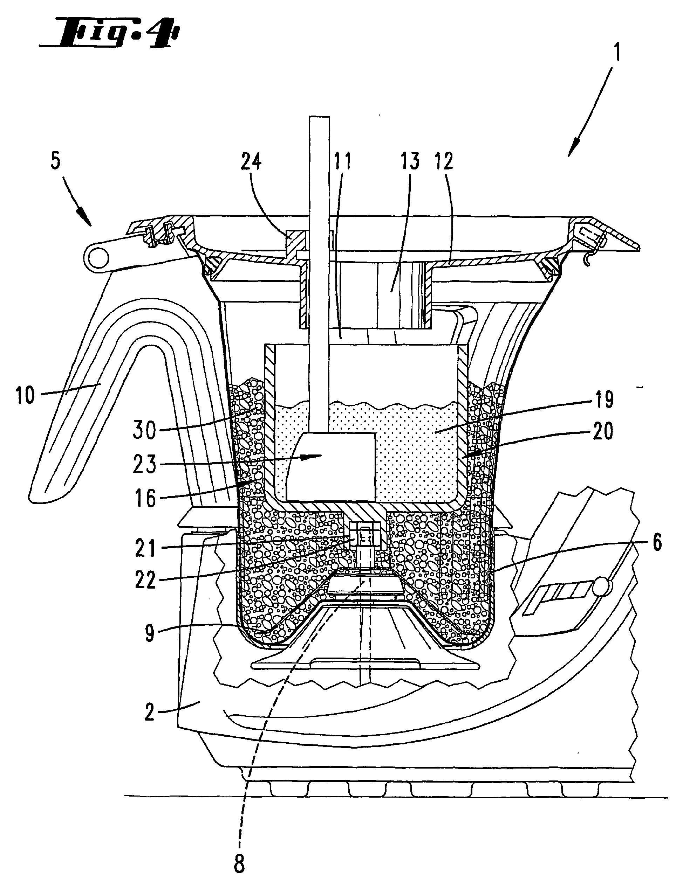

Hierzu wird zunächst, wie in Fig. 3 schematisch dargestellt, zur Bildung eines Vereisungsmediums 16 eine Mischung aus beispielsweise Eiswürfeln 17 und Salz 18 eingebracht und hiernach, ggf. unter Deckelverschluss, mittels des Zerkleinerungswerkes 9 zu einer homogenen Masse gemäß der Darstellung in Fig. 4 zerkleinert und verrührt.

Bei der gewählten Eiswürfel/Salz-Mischung wird eine Temperatur von -21°C erreicht. Mit anderen Mischungen können auch tiefere Temperaturen erreicht werden, so beispielsweise mit Eis und CaCl2 eine Temperatur von -50°C.

Hiernach wird ein, mit den benötigten Speiseeiszutaten 19 gefülltes Eisbereitungsgefäß 20 in das Rührgefäß 5 eingesetzt. Letzteres weist bevorzugt gemäß dem mittleren Abschnitt des Rührgefäßes 5 einen kreisrunden Querschnitt auf, wobei der Durchmesser des Eisbereitungsgefäßes 20 so gewählt ist, dass nach einem Einsetzen desselben zwischen der Außenwandung und der Rührgefäßinnenwandung ein ringspaltähnlicher Zwischenraum 30 verbleibt.

Bodenunterseitig ist das Eisbereitungsgefäß 20 mit einer Formschluss-Kupplungsausnehmung 21 versehen, zur drehfesten Anordnung des Eisbereitungsgefäßes 20 an einem in das Rührgefäß 5 hineinragenden, zentralen Kupplungsvorsprung 22 des Zerkleinerungswerkes 9.

Nach dem Einsetzen des Eisbereitungsgefäßes 20 in das Rührgefäß 5 passt sich das homogenisierte Vereisungsmedium 16 der Außenkontur des Eisbereitungsgefäßes 20 an, womit ein optimaler Wärmeübergang gegeben ist.

Die Kupplungsausnehmung 21 ist darüber hinaus so ausgebildet, dass das Eisbereitungsgefäß 20 in Vertikalrichtung unter Beibehaltung des Formschlusses mit dem Kupplungsvorsprung 22 beweglich ist, um dem Vereisungsmedium-Bett folgen zu können, sofern dieses sich setzt.

In das Eisbereitungsgefäß 20 ragt ein Schaber 23 ein. Letzterer ist gegenüber dem Eisbereitungsgefäß 20 feststehend über eine, an einem Schaberstil angreifende Cliphalterung 24 an dem Deckel 12, die Füllöffnung 13 durchtretend gehaltert. Dieser Schaber 23 verhindert die Bildung einer isolierenden Eisschicht auf dem Eisbereitungsgefäßboden bzw. an dessen Innenwandung.

Um die gewünschte Vereisungstemperatur des Vereisungsmediums einzustellen kann mittels der Heizung 14 eine gemäßigte Aufheizung des Rührgefäßes 5 vorgenommen werden.

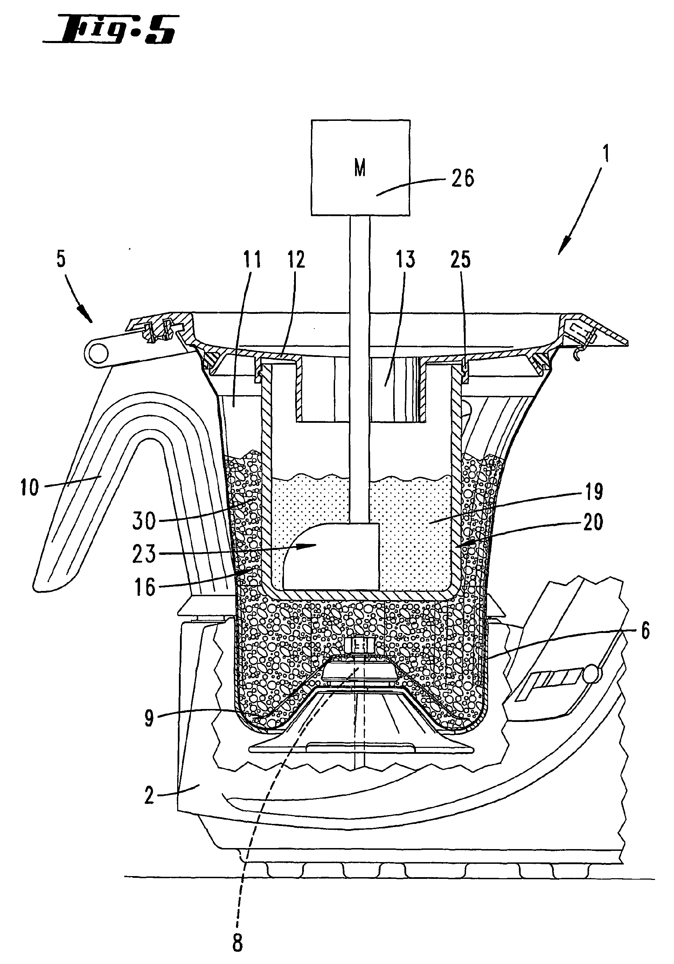

In Fig. 5 ist eine alternative Ausgestaltung des Erfindungsgegenstandes dargestellt, bei welcher das Eisbereitungsgefäß 20 drehfest, jedoch lösbar unterseitig des Deckels 12 angeordnet ist. Hierzu kann beispielsweise das Eisbereitungsgefäß 20 unterseitig des Deckels 12 im Bereich eines konzentrisch zur Füllöffnung 13 ausgerichteten Ringkragens 25 eingerastet sein.

Der Schaber 23 hingegen ist drehend antreibbar mittels eines gesonderten Motors 26. Der mit diesem Motor 26 versehene Schaber 23 wird durch die Füllöffnung 13 in das Eisbereitungsgefäß 20 gesteckt, wobei auch hier eine, die Drehung des Schabers 23 gewährleistende Halterung an dem Deckel 12 möglich ist. Alternativ kann der Motor 26 in dem Deckel 12 integriert sein.

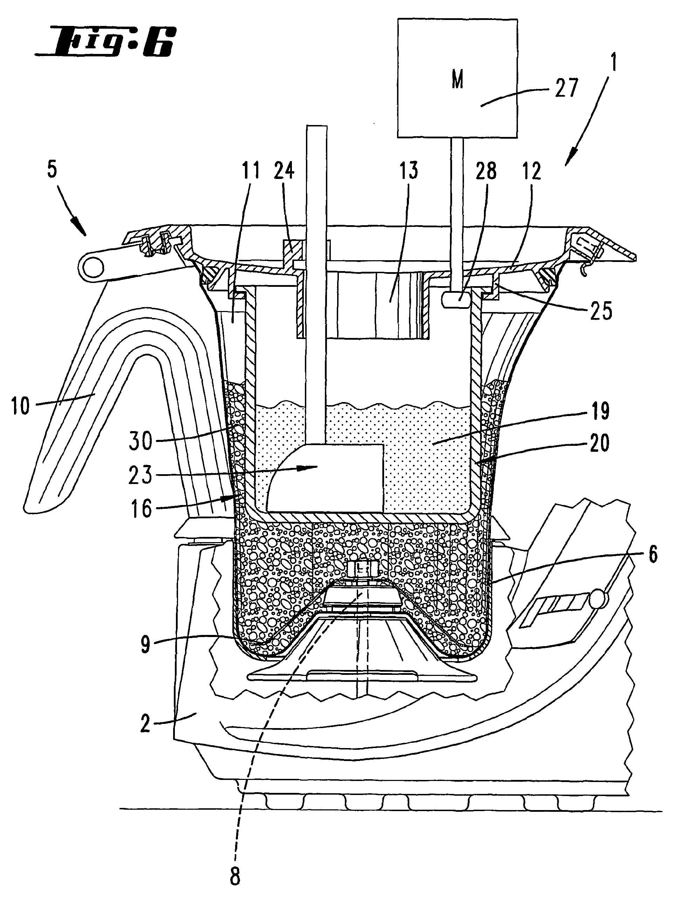

Eine weitere alternative Ausführungsform zeigt die Fig. 6. Auch hier ist das Eisbereitungsgefäß 20 unterseitig des Deckels 12 an diesem im Bereich eines Ringkragens 25 lösbar angeordnet, jedoch gegenüber der zuvor beschriebenen Ausführungsform drehbar. Hier erfolgt der Drehantrieb des Eisbereitungsgefäßes 20 über einen gesonderten Motor 27, welcher über ein Reibrad 28 innenseitig gegen die Eisbereitungsgefäßwandung tritt. Alternativ kann auch in diesem Bereich die Eisbereitungsgefäßwandung mit einem Zahnkranz oder dergleichen versehen sein. Darüber hinaus ist auch in diesem Ausführungsbeispiel eine Integration des Motor 27 in dem Deckel 12 möglich.

Gemäß der ersten Ausführungsform ist bei einer Drehung des Eisbereitungsgefäßes 20 der Schaber 23 feststehend am Deckel 12 gehaltert.

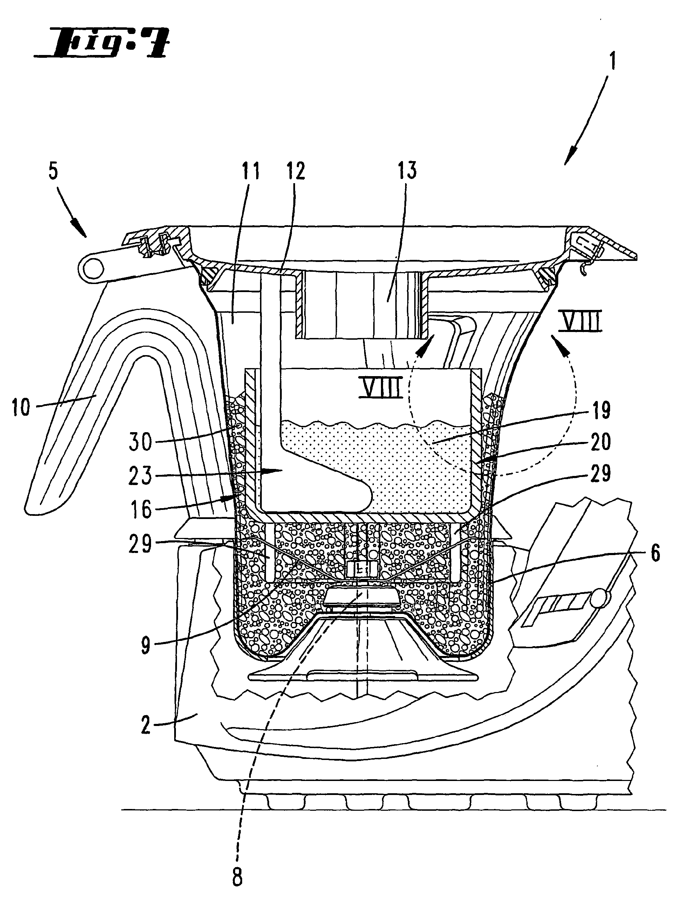

Alternativ zu den dargestellten Möglichkeiten eines, durch die Einfüllöffnung 13 eingesteckten und an dem Deckel 12 feststehend angeclipsten Schabers 23, kann dieser auch unterseitig des Deckels 12 an diesem angeformt sein. Eine derartige Ausbildung ist in der Fig. 7 dargestellt. Wie weiter aus dieser Ausführungsform zu erkennen, ist eine Drehmitnahme des Eisbereitungsgefäßes 20 auch dadurch möglich, dass bodenunterseitig des Eisbereitungsgefäßes 20 Kupplungselemente 29 in Form von Rippen oder Stiften in die Zwischenräume der Messer des Zerkleinerungswerkes 9 greifen. Diese bevorzugt als Rippen ausgebildeten Kupplungselemente 29 können weiter so ausgeformt sein, dass sie gleichzeitig als Abstellfüße für das Eisbereitungsgefäß 20 dienen. Die dargestellten konzentrisch geformten Kupplungselemente 29 bilden Rippensegmente aus und erlauben daher ein Drehen des Eisbereitungsgefäßes 20 bei gleichzeitiger Durchmischung des Vereisungsmediums 16, wodurch ein optimaler Wärmeübergang sicher gestellt ist.

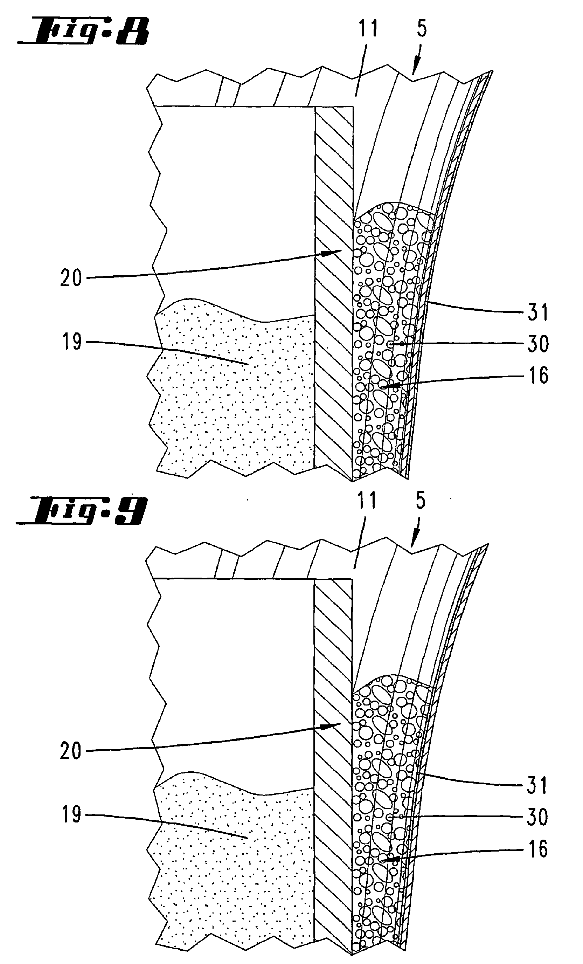

Wie weiter aus den Fig. 8 und 9 zu erkennen, kann das Rührgefäß 5 zur Vermeidung von Wärmeverlusten mit einer Wärme-Isolationsschicht 31 versehen sein, welche gemäß Fig. 8 außenwandig, mantelartig das Rührgefäß 5 umfaßt oder gemäß Fig. 9 innenwandig aufgebracht ist. Darüber hinaus ist auch eine Kombination denkbar, bei der sowohl innen- als auch außenseitig eine derartige Isolationsschicht vorgesehen ist.

## Patentansprüche

1. Küchenmaschine (1) mit einem Rührgefäß (5), einem, durch einen elektromotorischen Antrieb (7) betätigbaren Zerkleinerungswerk (9) in dem Rührgefäß (5), **gekennzeichnet durch** ein in das Rührgefäß einsetzbares, geschlossenwandiges Eisbereitungsgefäß (20), wobei sich zwischen dem Rührgefäß (5) und dem Eisbereitungsgefäß (20) ein Zwischenraum (30) ergibt, zur Aufnahme eines Vereisungsmediums (16), wobei weiter in das Eisbereitungsgefäß (20) ein Schaber (23) und/oder das Eisbereitungsgefäß (20) drehend antreibbar ist.

2. Küchenmaschine nach Anspruch 1, **gekennzeichnet durch** eine zwischen gemäßigter Temperierung und Kochen regelbaren Heizung im unteren Bereich des Rührgefäßes (5).

3. Küchenmaschine nach Anspruch 1 oder 2, **dadurch gekennzeichnet, dass** der Zwischenraum topfartig ausgebildet ist.

4. Küchenmaschine nach einem der vorhergehenden Ansprüche, **dadurch gekennzeichnet, dass** der Schaber feststehend an der Küchenmaschine (1) angeordnet ist und dass das Eisbereitungsgefäß (20) durch den Zerkleinerungsantrieb drehend antreibbar ist.

5. Küchenmaschine nach einem der vorhergehenden Ansprüche, **dadurch gekennzeichnet, dass** das Eisbereitungsgefäß (20) bodenunterseitig eine Formschluss-Kupplungsausnehmung (21) aufweist, zur Abkopplung an einen, frei in das Rührgefäß (5) hineinreagenden Kupplungsvorsprung (22) des Zerkleinerungswerkes (9).

6. Küchenmaschine nach einem der vorhergehenden Ansprüche, **dadurch gekennzeichnet, dass** das Eisbereitungsgefäß (20) an einem Deckel (12) des Rührgefäßes (5) aufgehängt in das Rührgefäß (5) hineinragt und dass der Schaber (23) durch einen gesonderten Motor (26) angetrieben von oben in das Eisbereitungsgefäß hineinragend mit dem feststehenden Eisbereitungsgefäß (20) zusammenwirkt.

7. Küchenmaschine nach einem der Ansprüche 1 bis 5, **dadurch gekennzeichnet, dass** das Eisbereitungsgefäß (20) an einem Deckel (12) des Rührgefäßes (5) um eine Vertikalachse (z) drehbar aufgehängt in das Rührgefäß (5) hineinragt und ein gesonderter Motor (27) das Eisbereitungsgefäß (20) relativ zu dem feststehenden Schaber (23) antreibt.

8. Küchenmaschine nach einem der vorhergehenden Ansprüche, **dadurch gekennzeichnet, dass** das Rührgefäß (5) außenwandig mit einer Wärme-Isolierschicht (31) versehen ist.

9. Küchenmaschine nach einem der vorhergehenden Ansprüche, **dadurch gekennzeichnet, dass** das Rührgefäß (5) innenwandig mit einer Wärme-Isolierschicht (31) versehen ist.

10. Verfahren zur Herstellung von Speiseeis in einer Küchenmaschine (1), wobei die Küchenmaschine (1) ein Rührgefäß (5) und ein in dem Rührgefäß (5) wirkendes Zerkleinerungswerk (9) aufweist, wobei weiter mittels des Zerkleinerungswerkes (9) ein Vereisungsmedium (16) fein zerkleinert wird und bei Verbleib in dem Rührgefäß (5) zur Anlage an ein, in das Rührgefäß (5) eingesetztes Eisbereitungsgefäß (20) gebracht wird, in welch letzterem ein Schaber (23) wirkt zur Abschabung der Speisemasse von der Innenwandung des Eisbereitungsgefäßes.

11. Verfahren nach Anspruch 10, **dadurch gekennzeichnet, dass** eine Aufheizung des Rührgefäßes (5) vorgenommen wird, um das Vereisungsmedium (16) auf eine gewünschte Vereisungstemperatur einzustellen.

## Claims

1. Food processor (1) comprising a stirrer vessel (5) and a comminuter (9) which is located in the stirrer vessel (5) and can be actuated by an electric motor drive (7), **characterised by** an ice-cream preparation vessel (20) which has closed walls and can be inserted into the stirrer vessel, an intermediate chamber (30) being created between the stirrer vessel (5) and the ice-cream preparation vessel (20) for receiving an icing medium (16), furthermore either a scraper (23) located in the ice-cream preparation vessel (20) and/or the ice-cream preparation vessel (20) being driveable in rotation.

2. Food processor according to Claim 1, **characterised by** a heater which is adjustable between a moderate equalised temperature and cooking temperature, the heater being located in the lower region of the stirrer vessel (5).

3. Food processor according to Claim 1 or 2, **characterised in that** the intermediate chamber is formed in the shape of a pot.

4. Food processor according to one of the preceding claims, **characterised in that** the scraper is disposed fixedly on the food processor (1) and **in that** the ice-cream preparation vessel (20) can be driven in rotation by the comminuting drive.

5. Food processor according to one of the preceding claims, **characterised in that** the ice-cream preparation vessel (20) has on its underside a positively-locking coupling recess (21) for coupling onto a coupling projection (22) of the comminuter (9) which projects freely into the stirrer vessel (5).

6. Food processor according to one of the preceding claims, **characterised in that** the ice-cream preparation vessel (20) projects into the stirrer vessel (5), suspended on a lid (12) of the stirrer vessel (5), and **in that** the scraper (23) co-operates with the fixed ice-cream preparation vessel (20), projecting from above into the ice-cream preparation vessel and driven by a separate motor (26).

7. Food processor according to one of Claims 1 to 5, **characterised in that** the ice-cream preparation vessel (20) projects into the stirrer vessel (5), suspended on a lid (12) of the stirrer vessel (5) to be rotatable about a vertical axis (z), and a separate motor (27) drives the ice-cream preparation vessel (20) relative to the fixed scraper (23).

8. Food processor according to one of the preceding claims, **characterised in that** the stirrer vessel (5) is provided on its outer wall with a heat-insulating layer (31).

9. Food processor according to one of the preceding claims, **characterised in that** the stirrer vessel (5) is provided on its inner wall with a heat-insulating layer (31).

10. Method for preparing edible ice-cream in a food processor (1), the food processor (1) having a stirrer vessel (5) and a comminuter (9) operating in the stirrer vessel (5), furthermore an icing medium (16) being finely comminuted by means of the comminuter (9) and the icing medium, while remaining in the stirrer vessel (5), being brought to engage against an ice-cream preparation vessel (20) inserted into the stirrer vessel (5), a scraper (23) operating in the ice-cream preparation vessel (20) to scrape the edible substance from the inner wall of the ice-cream preparation vessel.

11. Method according to Claim 10, **characterised in that** heating-up of the stirrer vessel (5) is effected in order to bring the icing medium (16) to the desired icing temperature.

## Revendications

1. Robot ménager (1) comprenant un récipient d'agitation (5) et un système de hachage (9) placé dans le récipient d'agitation (5) et susceptible d'être actionné par un entraînement électrique (7), **caractérisé par** un récipient (20) de préparation de glaces à paroi fermée, susceptible d'être introduit dans le récipient d'agitation, dans lequel il se forme entre le récipient d'agitation (5) et le récipient (20) de préparation de glaces, une chambre intermédiaire (30), destinée à recevoir un fluide de congélation (16), dans lequel en outre un racloir (23) dans le récipient (20) de préparation de glaces et/ou le récipient (20) de préparation de glaces est (sont) susceptible (s) d'être entraîné(s) en rotation.

2. Robot ménager selon la revendication 1, **caractérisé par** un chauffage réglable entre une température modérée et la cuisson dans la partie inférieure du récipient d'agitation (5).

3. Robot ménager selon la revendication 1 ou 2, **caractérisé en ce que** la chambre intermédiaire est réalisée en forme de pot ou de cloche.

4. Robot ménager selon l'une des revendications précédentes, **caractérisé en ce que** le racloir est disposé en position fixe sur le robot ménager (1) et **en ce que** le récipient (20) de préparation de glaces peut être entraîné en rotation par l'entraînement de hachage.

5. Robot ménager selon l'une des revendications précédentes, **caractérisé en ce que** le récipient (20) de préparation de glaces comporte, sous la face inférieure du fond, un évidement de couplage par emboîtement de forme (21), pour le couplage désaccouplable à une saillie de couplage (22) du système de hachage (9), qui pénètre librement dans le récipient d'agitation (5).

6. Robot ménager selon l'une des revendications précédentes, **caractérisé en ce que** le récipient (20) de préparation de glacessuspendu à un couvercle (12) du récipient d'agitation (5) pénètre en saillie dans le récipient d'agitation (5) et **en ce que** le racloir (23), entraîné par un moteur séparé (26) et pénétrant par le haut dans le récipient de préparation de glaces (20), coopère avec le récipient (20) de préparation de glacesqui est fixe.

7. Robot ménager selon l'une des revendications 1 à 5, **caractérisé en ce que** le récipient (20) de préparation de glaces est suspendu à un couvercle (12) du récipient d'agitation (5) en étant susceptible de tourner autour d'un axe vertical (z) et pénètre dans le récipient d'agitation (5) et un moteur séparé (27) entraîne le récipient (20) de préparation de glacespar rapport au racloir fixe (23).

8. Robot ménager selon l'une des revendications précédentes, **caractérisé en ce que** le récipient d'agitation (5) est pourvu sur la paroi extérieure d'une couche d'isolation thermique (31).

9. Robot ménager selon l'une des revendications précédentes, **caractérisé en ce que** le récipient d'agitation (5) est pourvu sur la paroi intérieure d'une couche d'isolation thermique (31).

10. Procédé pour la préparation de glaces dans un robot ménager (1), dans lequel le robot ménager (1) comprend un récipient d'agitation (5) et un système de hachage (9) opérant dans le récipient d'agitation (5), dans lequel en outre un fluide de congélation (16) est finement haché au moyen du système de hachage (9) et, en restant dans le récipient d'agitation (5), est amené à se déposer sur un récipient (20) de préparation de glaces introduit dans le récipient d'agitation (5), un racloir (23) opérant dans ce dernier pour racler la masse d'alimentation en glace de la paroi intérieure du récipient de préparation de glaces.

11. Procédé selon la revendication 10, **caractérisé en ce que** l'on opère un chauffage du récipient d'agitation (5) pour régler le fluide de congélation (16) à une température de congélation souhaitée.
